# EUROPEAN PATENT APPLICATION

(11) **EP 4 131 936 A1**
(43) Date of publication of application: **08.02.2023**
(21) Application number: 22186989.4
(22) Date of filing: 26.07.2022
(51) Int. Cl.: H04N 5/272, H04N 5/265, G11B 27/10, H04N 21/854, G11B 27/031, H04N 21/472

(54) **A SYSTEM AND METHOD FOR PROGRAMING VIDEO**

(30) Priority: 03.08.2021 US 202163228822 P
(71) Applicant: Idomoo Ltd, 4366507 Raanana (IL)
(72) Inventor: KALISH, Danny, Raanana 4372810 (IL)
(74) Representative: Balder IP Law, S.L.

(57) **Abstract**

The present invention provides a method for generating video from scratch, comprising the steps of:
- Retrieving template video;
- Reading commands of predefined programming language, wherein command include instruction corresponding to video action and time line at predefined layer of media/video element (properties) and new parameters including information from external data sources,
wherein the video action including at least one of: drawing action, object selection, change of object properties, creating text, motion action relating at least one object, background creation; defining layer of video, animation of the object itself
- Generating video layers by Applying the relevant actions based on commands instruction, scheduling timing and layer definitions,
wherein the actions include changing object properties drawing action, object selection, change of object properties, creating text, motion action relating at least one object, background creation; defining layer of video, animation of the object itself
- integrating video template with generated video layers
- Rendering said frames to generate a video.

## Description

### BACKGROUND

### TECHNICAL FIELD

The present invention relates generally to generation of video to using programing language, more specifically programming video based on video template.

### SUMMARY

The present invention provides a Method for generating video, implemented by one or more processors operatively coupled to a non-transitory computer readable storage device, on which are stored modules of instruction code that when executed cause the one or more processors to perform the steps of:
- Retrieving video template comprising partial parameter of data of objects, object characteristics, data parameters, backgrounds, motion definitions of objects;
- Reading commands of predefined programming language, wherein command include instruction corresponding to video action and time line at any time and at predefined layer of media/video element (properties) and new video parameters other than the video initial/partial parameter including information from external data sources,
   wherein the video action including at least one of: drawing action, object selection, change of object properties, creating text, motion action relating at least one object, background creation; defining layer of video, animation of the object itself
- Generating video layers by applying the relevant actions based on commands instruction, scheduling timing and layer definitions,
   wherein the actions include changing object properties drawing action, object selection, change of object properties, creating text, motion action relating at least one object, background creation; defining layer of video, animation of the object itself
- integrating video template with generated video layers
- Rendering said frames to generate a video.

The present invention provides a method for generating video from scratch, implemented by one or more processors operatively coupled to a non-transitory computer readable storage device, on which are stored modules of instruction code that when executed cause the one or more processors to perform the steps of:
- Retrieving template video comprising partial parameter of data of objects, object characteristics, data parameters, backgrounds, motion definitions of objects and converting video template to instruction commands for generating a video;
- Reading commands of predefined programming language from a user and commands based on the video template, wherein command include instruction corresponding to video action and time line at predefined layer of media/video element (properties) and new parameters including information from external data sources,
   wherein the video action including at least one of: drawing action, object selection, change of object properties, creating text, motion action relating at least one object, background creation; defining layer of video, animation of the object itself
- Generating video layers by applying the relevant actions based on commands instruction, scheduling timing and layer definitions,
   wherein the actions include changing object properties drawing action, object selection, change of object properties, creating text, motion action relating at least one object, background creation; defining layer of video, animation of the object itself
- Rendering said frames to generate a video.

According to some embodiments of the present invention throughout the generation of the video data of predefined parameters is retrieved using API from various sources, the predefined data parameters include both parameters define by the video template and defined by the programmer.

According to some embodiments of the present invention during programing mode are performed the following steps: emulating video ad on layer integrated with template based on one or more commands syntax and presenting time line, and objects at each time point, each object having properties, defining z layer for each object.

According to some embodiments of the present invention the video generating comprise generating video layer objects based on entered command adding video layer to be inserted in-between layers of the template using program API adding parameters to be updated by the API determining the layer and its position between the layers.

According to some embodiments of the present invention the programming comprises adding properties having functionalities including at least one of: hyperlink, rewind, jump to different location, navigation, sending message, ordering. According to some embodiments of the present invention at least part of the default setting parameters is inherent from objects in the template, to new objects added by the programmer.

According to some embodiments of the present invention at least part of the default setting parameters is inherent based on setting of nearby objects or based on setting of or similar object based on type and /or function of the object and/or properties of objects.

The present invention discloses a system for generating video, implemented by one or more processors operatively coupled to a non-transitory computer readable storage device, on which are stored modules of instruction code that when executed cause the one or more processors to perform the steps of:
- Template generation module for generating and Retrieving video template comprising initial/partial parameter of data of objects, object characteristics, data parameters, backgrounds, motion definitions of objects;
- Programming module configured for Reading commands of predefined programming language, wherein command include instruction corresponding to video action and time line at predefined layer of media/video element (properties) and new video parameters other than the video partial parameter including information from external data sources,
   wherein the video action including at least one of: drawing action, object selection, change of object properties, creating text, motion action relating at least one object, background creation; defining layer of video, animation of the object itself
- Video generator module configured for:
   ∘ generating video layers by applying the relevant actions based on commands instruction, scheduling timing and layer definitions, wherein the actions include changing object properties drawing action, object selection, change of object properties, creating text, motion action relating at least one object, background creation; defining layer of video, animation of the object itself and integrating video template with generated video layers;
   ∘ Rendering said frames to generate a video.

According to some embodiments of the present invention throughout the generation of the video data of predefined parameters is retrieved using API from various sources, the predefined data parameters include both parameters define by the video template and defined by the programmers.

According to some embodiments of the present invention during programing mode are performed the following steps: Emulating video ad on layer integrated with template based on one or more commands syntax and presenting time line, and objects at each time point, each object having properties, defining z layer for each object

According to some embodiments of the present invention the video generating comprise generating video layer objects based on entered command adding video layer to be inserted in-between layers of the template using program API adding parameters to be updated by the API determining the layer and its position between the layers.

According to some embodiments of the present invention the programming comprises adding properties having functionalities including at least one of: hyperlink, rewind, jump to different location, navigation, sending message, ordering.

According to some embodiments of the present invention at least part the default setting parameters are inherent from objects in the template, to new objects added by the programmer

According to some embodiments of the present invention at least part the default setting parameters are inherent based on setting of nearby objects or based on setting of or similar object based on type/function object and/or properties of objects, such shape colour.

### BRIEF DESCRIPTION OF THE SCHEMATICS

The present invention will be more readily understood from the detailed description of embodiments thereof made in conjunction with the accompanying drawings of which:
**Figure 1A** is a block diagram, depicting the components and the environment of the video generation, according to some embodiments of the invention.
**Figure 1B** is a block diagram, depicting the components and the environment of the video adapting system having inner module for the adaption process, according to some embodiments of the invention.
**Figure 2** is a flowchart depicting the video programing module 100, according to some embodiments of the invention.
**Figure 3** is a flowchart depicting Layer generation module according to some embodiments of the invention.
**Figure 4A** **presents** a flowchart, Video generator, according to some embodiments of the invention.
**Figure 4B** presents a flowchart, Video generation, according to some embodiments of the invention

### DETAILED DESCRIPTION OF THE VARIOUS MODULES

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

Following is a table of definitions of the terms used throughout this application, adjoined by their properties and examples.

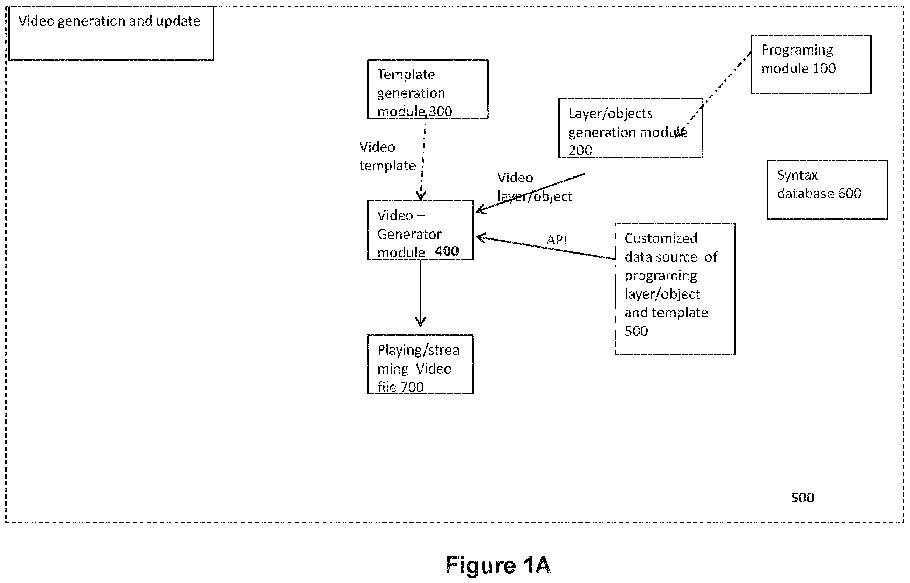

**Figure 1A** is a block diagram, depicting the components and the environment of the video generation, according to some embodiments of the invention.

A video template module 300, provides a video template which include initial/partial information of data of objects, object characteristics, data parameters, backgrounds, motion definitions of objects. The programing module 100 enable users/programmers to ad layers to the video template, using programing language using syntax database 300. Layer/objects generation module translates the programing instruction into objects and video layers. Based on the video template and the created video layers the video integration module 400 generate new video integrating all layers. Throughout the generation of the video data of predefined parameters are retrieved using API from various sources, the predefined data parameters include both parameters define by the video template and defined by the programmers. For example, the user may define profile parameters, and the programmers may add environmental parameters such as temperature.

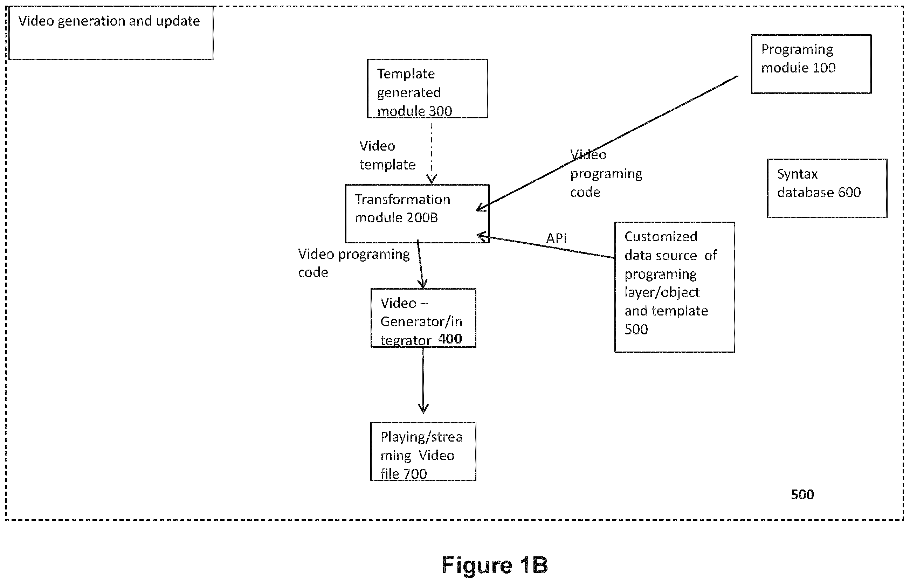

**Figure 1B** is a block diagram, depicting the components and the environment of the video generation, according to some embodiments of the invention.

According to this embodiment the video template is transformed into programing instructions using transformation module 200B. The generation module receives two different programing codes, one is generated from the source template and the second is generated by the programmer, the programming codes are integrated into generate new video.

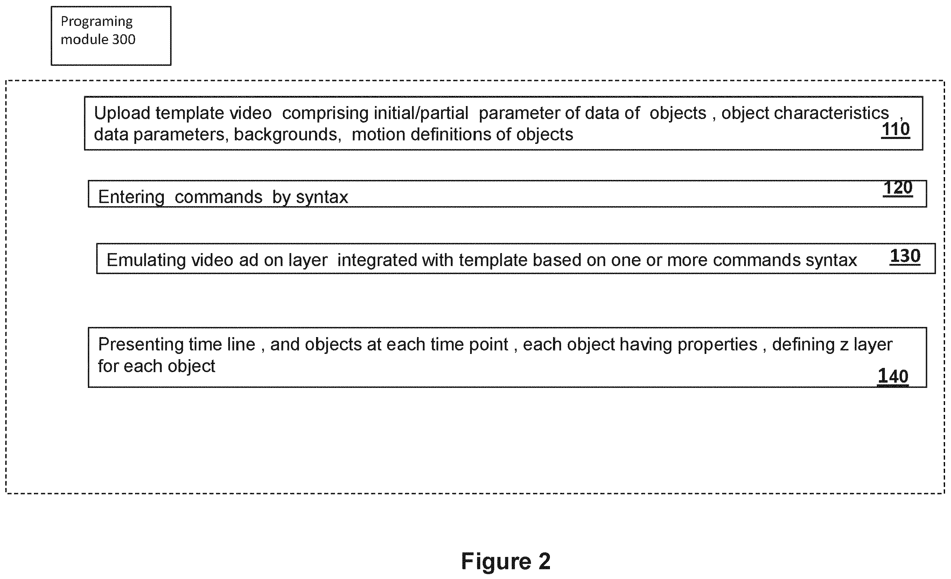

**Figure 2** is a flowchart depicting the video programing module 100, according to some embodiments of the invention.

The video programing 100, apply at least one of the following steps:
Upload template video, which include initial/partial information of data of objects, object characteristics, data parameters, backgrounds, motion definitions of objects (110);
Entering commands by syntax (112);
Emulating video ad on layer integrated with template based on one or more commands syntax (114);
Presenting time line, and objects at each time point, each object having properties, defining z layer for each object (116);

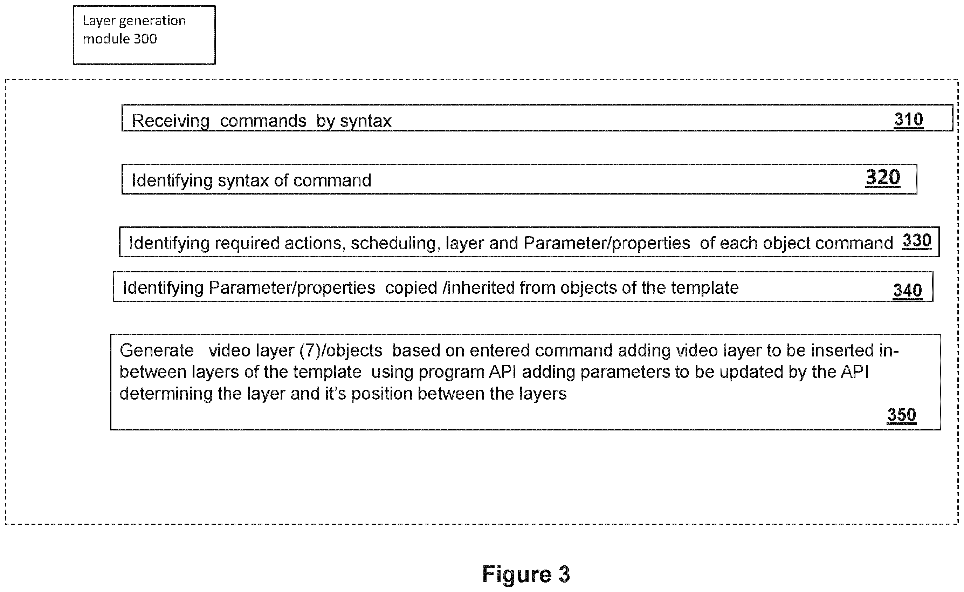

**Figure 3** is a flowchart depicting Layer generation module according to some embodiments of the invention.

The video layer tool 200, apply at least one of the following steps:
Receiving commands by syntax; (310)
Identifying syntax of command ;(320)
Identifying required actions, scheduling, layer and Parameter/properties of each object command ;(330)
Identifying Parameter/properties copied /inherited from objects of the template; 340
Generate video layer (7)/objects based on entered command adding video layer to be inserted in-between layers of the template, using program API adding parameters to be updated by the API determining the layer and its position between the layers;(350)

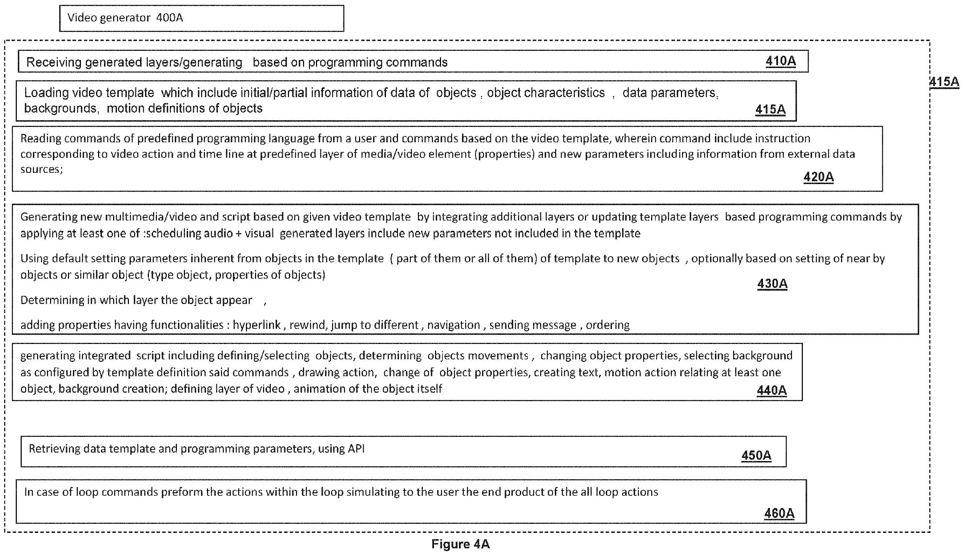

**Figure 4A** illustrates a flowchart of the Video generator module, according to some embodiments of the invention.

The video generation module 400A is configured to apply at least one of the following steps:
Loading video template which include initial/partial information of data of objects, object characteristics, data parameters, backgrounds, motion definitions of objects;410A
Receiving generated layers/generating based on programming commands 414A;
Reading commands of predefined programming language from a user and commands based on the video template, wherein command include instruction corresponding to video action and time line at predefined layer of media/video element (properties) and new parameters including information from external data sources; (420A)
Generating new multimedia/video and script based on given video template by integrating additional layers or updating template layers based on programming commands comprising :scheduling audio + visual generated layers to include new parameters not included in the template, optionally determining in which layer in which the object should appear.
integrating video template with generated video layers
Rendering said frames to generate a video;
According to some embodiments adding properties having functionalities such as: hyperlink, rewind, jump to different location, navigation, sending message, ordering (430 A)
According to some embodiments of the present invention the usage of default setting parameters is inherent from objects in the template (part of them or all of them) of template to new objects , optionally based on setting of near by objects; based on setting of or similar object based on type/function object and/or properties of objects, such shape colour;
Reading commands of predefined programming language from a user and commands based on the video template, wherein command include instruction corresponding to video action and time line at predefined layer of media/video element (properties) and new parameters including information from external data sources,
Generating integrated script including defining/selecting objects, determining objects movements, changing object properties, selecting background as configured by template definition and command comprising at least one of: drawing action, change of object properties, creating text, motion action relating at least one object, background creation; defining layer of video, animation of the object itself ;440A
Retrieving data template and programming parameters, using API from external data sources;450A
In case of loop commands preform the actions within the loop simulating to the user the end product of the all loop actions; 460A

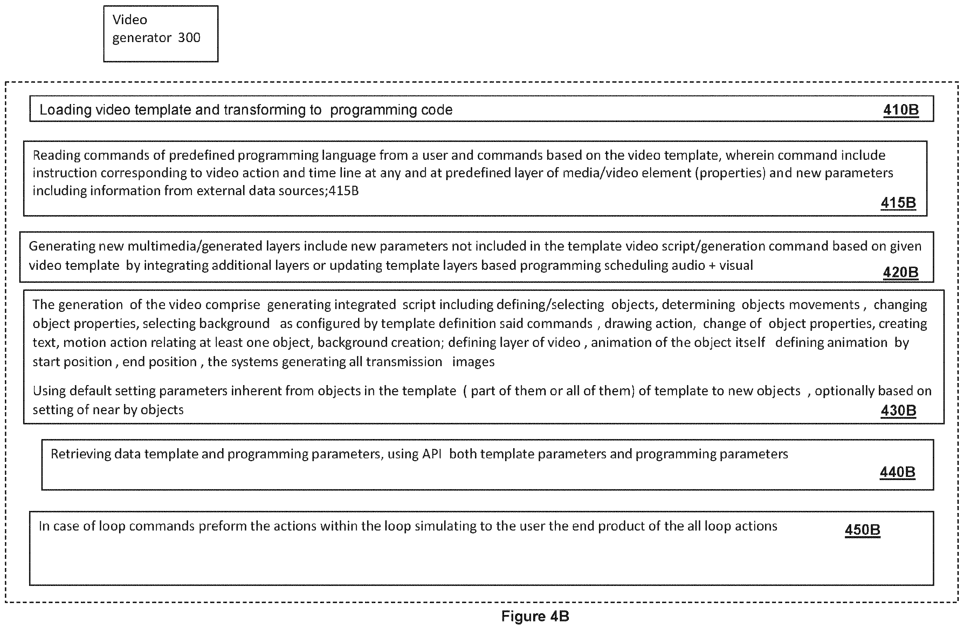

**Figure 4B** illustrates a flowchart of Video generation module, according to alternative embodiments of the invention

The video generation module 400B is configured to apply at least one of the following steps:
Loading video template and transforming to programming code ;410B
Reading commands of predefined programming language from a user and commands based on the video template, wherein command include instruction corresponding to video action and time line at predefined layer of media/video element (properties) and new parameters including information from external data sources;415B
Generating new multimedia/video script/generation command based on given video template by integrating additional layers or updating template layers based programming scheduling audio + visual generated layers include new parameters not included in the template ;420B;
The generation of the integrated script including defining/selecting objects, determining objects movements, changing object properties, selecting background as configured by template definition said commands , drawing action, change of object properties, creating text, motion action relating at least one object, background creation; defining layer of video , animation of the object itself ;430B
Retrieving data template and programming parameters, using API of both template parameters and programming parameters ;440B.

In case of loop commands preform the actions within the loop simulating to the user the end product of the all loop actions (450B);

Many alterations and modifications may be made by those having ordinary skill in the art without departing from the spirit and scope of the invention. Therefore, it must be understood that the illustrated embodiment has been set forth only for the purposes of example and that it should not be taken as limiting the invention as defined by the following invention and its various embodiments and/or by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention .

The words used in this specification to describe the invention and its various embodiments are to be understood not only in the sense of their commonly defined meanings, but to include by special definition in this specification structure, material or acts beyond the scope of the commonly defined meanings. Thus, if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptually equivalent, what can be obviously substituted and also what essentially incorporates the essential idea of the invention.

Although the invention has been described in detail, nevertheless changes and modifications, which do not depart from the teachings of the present invention, will be evident to those skilled in the art. Such changes and modifications are deemed to come within the purview of the present invention and the appended claims.

## Claims

1. A method for generating video, implemented by one or more processors operatively coupled to a non-transitory computer readable storage device, on which are stored modules of instruction code that when executed cause the one or more processors to perform the steps of:
- retrieving video template comprising partial parameter of data of objects, object characteristics, data parameters, backgrounds, motion definitions of objects;
- reading commands of predefined programming language, wherein command include instruction corresponding to video action and time line at any point and at predefined layer of video and new video parameters and/or object properties other than the video partial parameters including information from external data sources;
wherein the video action including at least one of: drawing action, object selection, change of object properties, creating text, motion action relating at least one object, background creation; defining layer of video, animation of the object itself
- generating video layers by applying the relevant actions based on commands instruction, scheduling timing and layer definitions;
wherein the actions include changing object properties drawing action, object selection, change of object properties, creating text, motion action relating at least one object, background creation; defining layer of video, animation of the object itself;
- integrating video template with generated video layers;
- Rendering said frames to generate a video.

2. A Method for generating video from scratch, implemented by one or more processors operatively coupled to a non-transitory computer readable storage device, on which are stored modules of instruction code that when executed cause the one or more processors to perform the steps of:
- Retrieving template video comprising partial parameter of data of objects, object characteristics, data parameters, backgrounds, motion definitions of objects and converting video template to instruction commands for generating a video;
- Reading commands of predefined programming language from a user and commands based on the video template, wherein command include instruction corresponding to video action and time line at predefined layer of media/video element (properties) and new parameters including information from external data sources;
wherein the video action including at least one of: drawing action, object selection, change of object properties, creating text, motion action relating at least one object, background creation; defining layer of video, animation of the object itself;
- Generating video layers by applying the relevant actions based on commands instruction, scheduling timing and layer definitions,
wherein the actions include changing object properties drawing action, object selection, change of object properties, creating text, motion action relating at least one object, background creation; defining layer of video, animation of the object itself; and
- Rendering said frames to generate a video.

3. The method of claim 1 wherein throughout the generation of the video data of predefined parameters is retrieved using API from various sources, the predefined data parameters include both parameters define by the video template and defined by the programmer.

4. The method of claim 1 wherein during programing mode are performed the following steps: emulating video ad on layer integrated with template based on one or more commands syntax and presenting time line, and objects at each time point, each object having properties, defining z layer for each object.

5. The method of claim 1wherein the video generating comprise generating video layer objects based on entered command adding video layer to be inserted in-between layers of the template using program API adding parameters to be updated by the API determining the layer and its position between the layers.

6. The method of claim lwherien the programming comprises adding properties having functionalities including at least one of: hyperlink, rewind, jump to different location, navigation, sending message, ordering.

7. The method of claim lwherien at least part if the default setting parameters are inherent from objects in the template, to new objects added by the programmer.

8. The method of claim lwherien at least part the default setting parameters are inherent based on setting of nearby objects or based on setting of or similar object based on type and /or function of the object and/or properties of objects.

9. A system for generating video, implemented by one or more processors operatively coupled to a non-transitory computer readable storage device, on which are stored modules of instruction code that when executed cause the one or more processors to perform the steps of:
- template generation module for generating and retrieving video template comprising partial parameter of data of objects, object characteristics, data parameters, backgrounds, motion definitions of objects.
- Programming module configured for Reading commands of predefined programming language, wherein command include instruction corresponding to video action and time line at any point and at predefined layer of media/video element (properties) and new video parameters other than the video partial parameter including information from external data sources.
wherein the video action including at least one of: drawing action, object selection, change of object properties, creating text, motion action relating at least one object, background creation; defining layer of video, animation of the object itself
- Video generator module configured for: ∘ generating video layers by applying the relevant actions based on commands instruction, scheduling timing and layer definitions, wherein the actions include changing object properties drawing action, object selection, change of object properties, creating text, motion action relating at least one object, background creation; defining layer of video, animation of the object itself and integrating video template with generated video layers;
- Rendering said frames to generate a video.

10. The system of claim 9 wherein throughout the generation of the video data of predefined parameters is retrieved using API from various sources, the predefined data parameters include both parameters define by the video template and defined by the programmers.

11. The system of claim 9 wherein during programing mode are performed the following steps: Emulating video ad on layer integrated with template based on one or more commands syntax and presenting time line, and objects at each time point, each object having properties, defining z layer for each object.

12. The system of claim 9 wherein the video generating comprise generating video layer objects based on entered command adding video layer to be inserted in-between layers of the template using program API adding parameters to be updated by the API determining the layer and its position between the layers.

13. The system of claim 9 wherein the programming comprises adding properties having functionalities including at least one of: hyperlink, rewind, jump to different location, navigation, sending message, ordering.

14. The system of claim 9 wherein at least part the default setting parameters are inherent from objects in the template, to new objects added by the programmer from nearby objects.

15. The system of claim 9 wherein at least part the default setting parameters are inherent based on setting of or similar object based on type/function object and/or properties of objects.
